(19) Europäisches Patentamt
European Patent Office
Office européen des brevets

(11) Publication number: 0 380 017 A2

# (12) EUROPEAN PATENT APPLICATION

(21) Application number: 90101200.5

(51) Int. Cl.[5]: C08G 73/06

(22) Date of filing: 22.01.90

(30) Priority: 24.01.89 IT 1916589

(43) Date of publication of application:
01.08.90 Bulletin 90/31

(84) Designated Contracting States:
BE CH DE ES FR GB IT LI NL SE

(71) Applicant: HIMONT ITALIA S.r.l.
Foro Buonaparte, 31
I-20121 Milano(IT)

(72) Inventor: Fornasier, Roberto
Cascina Molnaccio
I-28010 Caltignaga, Novara(IT)
Inventor: Tornatore, Massimo
Corso Torino 13
I-28100 Novara(IT)
Inventor: Chapoy, Larry Lawrence
Via Davicini 60
I-28040 Lesa, Novara(IT)

(74) Representative: Gervasi, Gemma et al
NOTARBARTOLO & GERVASI Srl Viale
Bianca Maria 33
I-20122 Milan(IT)

## (54) A process for the preparation of triazinic polymers.

(57) A process for the preparation of triazinic polymers comprising reacting a bifunctional triazinic derivative with two equivalents of at least one diamine.

EP 0 380 017 A2

# A PROCESS FOR THE PREPARATION OF TRIAZINIC POLYMERS

The present invention relates to a process for the preparation of triazinic polymers.

More particularly the present invention relates to a process for the preparation of triazinic polymers obtained by polycondensation of triazinic derivatives with diamines.

Processes for the preparation of polymers containing units of triazinic type, are known in the prior art. One of these processes is disclosed in European patent application 53,775 claiming the synthesis and use of polymeric triazinic derivatives as stabilizers for synthetic polymers such as polyolefins, polystyrene, acrylic polymers and so on.

According to what is described in this patent application, polytriazinyldiamines can be obtained by reacting a di-halogenated triazine with an organic diamine by using reagents in nearly equimolecular ratios and by operating in the presence of an inorganic base having the function to act as an acceptor of the halogenidric acid generating during the polycondensation reaction.

As well known, for instance in "Bulletin de la Societé Chimique de France" 1970 No. 2 page 606, the polycondensation reactions between a trazine and a diamine or a diol require very long polymerization times, which, in most cases, are over 10-20 hours.

This drawback is felt especially when the preparation of the triazinic polymers is carried out on industrial scale, where, therefore, a particular technology is required in order to keep the polymerization under control for the whole time necessary for the reaction.

The Applicant has now found that, the polymerization times can be reduced to values below 60 minutes and at times even to 30 minutes, if the triazinic polymers are prepared by reacting a bifunctional triazinic derivative with particular molar excesses of a diamine.

This result can be considered surprising indeed, as in the above mentioned article and in a great number of other examples of the chemical literature, one shows, that, in this kind of polycondensation, the ratios among the reagents have to be equimolecular and cannot differ more than 2-3% from the unitary value without causing a collapse in the molecular weights.

Therefore the object of the present invention is a process for the preparation of triazinic polymers comprising reacting a bifunctional triazinic derivative with two equivalents of at least one diamine.

According to a preferred embodiment of the process object of the present invention, the triazinic derivatives can be selected from the triazines having general formula:

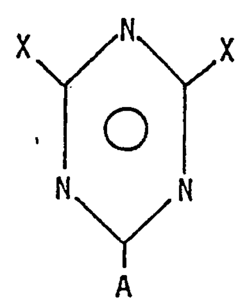

(I)

or from the di-s-triazines having general formula:

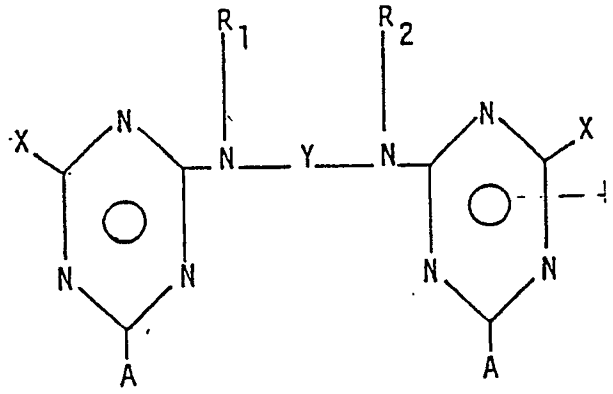

(II)

wherein X represents a halogen such as chlorine or bromine, A is selected from a linear or branched alkyl, cycloalkyl, aryl, alkylaryl or arylalkyl radical, containing from 1 to 20 carbon atoms or from $-OR_3$, $-NR_4R_5$ groups and wherein $R_1$, $R_2$, $R_3$, $R_4$, $R_5$, which may be the same or different, mean a hydrogen atom or a linear or branched, alkyl, cycloalkyl, aryl, alkylaryl or arylalkyl radical containing from 1 to 30 carbon atoms and Y represent an alkylene, cycloalkylene, arylene, alkylenearyl or arylenealkyl group containing from 1 to 30 carbon atoms.

Examples of triazines having general formula (I) are:

2,4-dichloro-6-methyl-1,3,5 triazine, 2,4-dichloro-6-ethyl-1,3,5 triazine, 2,4-dichloro-6-phenyl-1,3,5 triazine, 2,4-dichloro-6-phenylethyl-1,3,5 triazine, 2,4-dichloro-6-methoxy-1-3-5 triazine, 2,4-dichloro-6-ethoxy-1,3,5 triazine, 2,4-dichloro-6-phenoxy-1,3,5 triazine, 2,4-dichloro-6-dimethylamino-1,3,5 triazine, 2,4-dichloro-6-dimethylamino-1,3,5 triazine, 2,4-dichloro-6-methylethylamino-1,3,5 triazine, 2,4-dichloro-6-phenylamino-1,3,5 triazine, 2,4-dibromo-6-methyl-1,3,5 triazine, 2,4-dibromo-6-ethyl-1,3,5 triazine and the like.

Examples of di-s-triazines having general formula (II) are:

N,N′-bis(2-chloro-4-methoxy-1,3,5-triazinyl)hexamethylenediamine, N,N′-bis(2-chloro-4-methoxy-1,3,5-triazinyl)-1,12 diamino dodecane, N,N′-bis(2-chloro-4-methoxy-1,3,5-triazinyl)-1,10 diamino dodecane, N,N′-bis(2-chloro-4-ethoxy-1,3,5-triazinyl)-1,12 diamino dodecane, N,N′-bis(2-chloro-4-ethoxy-1,3,5-triazinyl)-hexamethylenediamine, N,N′-bis(2-chloro-4-methyl-1,3,5-triazinyl)hexamethylenediamine, N,N′-bis(2-chloro4-ethyl-1,3,5-triazinyl)-1,12 diamino dodecane, N,N′-bis(2-bromo-4-methoxy-1,3,5-triazinyl)-hexamethylenediamine, N,N′-bis(2-bromo-4-methoxy-1,3,5-triazinyl)-1,12 diamino dodecane and the like.

According to a further preferred embodiment of the process object of the present invention, the triazinic derivative is caused to react with two equivalents of at least one diamine selected from the ones having general formula:

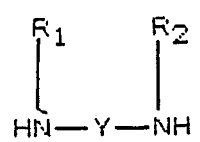

(III)

wherein Y, $R_1$, $R_2$ have the aforesaid meaning.

Examples of diamines of general formula (III) are: 1,6-diamino hexane, 1,8-diamino octane, 1,10-diamino decane, 1,12-diamino dodecane, N,N′-dimethyl-1,12-diamino dodecane, cyclohexylenediamine, phenylenediamine, N,N′-dimethylphenylenediamine and the like.

The process object of the present invention, requires, though not necessarily, that the polycondensation reaction is carried out in the presence of a solvent, that is generally high-boiling and endowed with a good dissolving power towards the reagents. Examples of solvents which can be used in the present process are aromatic solvents such as xylenes.

According to a further preferred embodiment of the process object of the present invention the polycondensation is carried out at a temperature ranging from 40 to 200° C at room pressure and optionally under a flow or a head of an inert gas, for instance nitrogen, with reaction times below 60 minutes.

The polymer can be recovered from the reaction medium by known techniques, for instance by evaporation of the solvent or by filtration and it has an inherent viscosity, measured in formic acid at 30° C, at a concentration of 0.25 g/dl, ranging from 0.5 to 10 dl/g.

The diamines of general formula (III) are known products, which are easily available on the market, whereas the triazines of general formula (I), which are known as well, can be obtained by any process disclosed in the literature, for instance according to the process disclosed in "Journal of American Chemical Society" 73, 2986 (1951) or according to the process disclosed in European patent application 53,775.

As to the di-s-triazines of general formula (II), they can be obtained according to the process of Italian patent application 21369/A 87, which discloses the reaction of a triazine of general formula (I) with a diamine of general formula (III) to I/III molar ratios equal to 2.

The reaction is carried out at atmospheric pressure and at temperatures ranging from 40° C to 100° C and, preferably, in a solvent selected from the ones having a boiling point compatible with the reaction temperature and having a good solvating power both towards the reagents and the products.

Suitable solvents are the aprotic polar ones such as tetrahydrofuran, dioxane, acetone, methylethylketone and the like.

The formed halogenidric acid is neutralized by means of an organic base in solution or by means of an inorganic base in suspension. Such bases can be tertiary amines, lutidines, or hydroxidces, carbonates or bicarbonates of alkaline metals such as sodium, potassium and the like.

The reaction product can be recovered from the solution by known methods such as, for instance, by evaporation of the solvent or by precipitation with a non-solvent and subsequent filtration.

A few illustrative, but not limitative examples will be reported hereinafter, in order to better understand the present invention and to practice it.

## Example 1

38.8 g (0.2 moles) of 2,4 dichloro-6-ethoxy-1,3,5 triazine; 40.0 g (0.2 moles) of 1,12 diamino dodecane; 400 ml of xylene were introduced, under a slight nitrogen flow, into a reactor having a capacity of 1 litre (five neck cover), equipped with mechanical stirring, nitrogen inlet, cooler, thermometer and reagent inlet.

The solution was brought to 60° C and kept at this temperature for 30 minutes under mechanical stirring and a slight nitrogen flow. Then one added: 23.2 g (0.2 moles) of 1,6 diamino hexane and the solution was brought to 130° C, while keeping it under mechanical stirring and a slight nitrogen flow for 15 minutes, afterwards the polymer precipitated.

Then one added 40 ml of formic acid and one kept the whole under stirring till the polymer was completely dissolved.

The xylenic phase was separated from the formic acid containing the dissolved polymer and the latter was precipitated by pouring the acid phase into 5 l of water.

Then the polymer was filtered and washed three times with 2 l of water. Finally the polymer was dried under vacuum at 130° C for 16 hours and had an inherent viscosity of 2.6 dl/g, a temperature glass transition (Tg) of 80° C and a X-ray diffraction spectrum showing an amorphous structure.

## Example 2

20 g (0.1 moles of diamino dodecane, 17 g of anhydrous sodium carbonate and 160 ml of dioxane were loaded into a 500 ml flask.

38.8 g (0.2 moles) of 2,4-dichloro-6-ethoxy-1,3,5 triazine and 100 ml of dioxane were loaded into a dropping funnel. The solution containing the triazine was added drop by drop to the solution containing the diamine, by keeping the whole under stirring at room temperature; then the one carried on the reaction always under stirring, at 50° C for 1 hour.

Then the solution was poured into 800 ml of distilled water.

One formed a precipitate which was filtered, washed with distilled water, dissolved in chloroform, dried on calcium chloride, filtered, evaporated under vacuum and crystallized again from a chloroform : hexane (9:1) solution.

Therefore one obtained, after drying at 60° C under vacuum, 30.5 g (yield 59%) of a product in the form of a white microcrystalline powder, consisting essentially of N,N′-bis-(2-chloro-4-ethoxy-1,3,5-triazinyl)-1,12 diamino dodecane.

12.85 g (0.025 moles) of this product were introduced, under a slight flow of nitrogen, into a 500 ml flask, equipped with magnetic stirring, cooler and dipped in a thermostatic bath.

Then one added 5.8 g (0.05 moles) of 1,6-diamino hexane, dissolved in 250 ml of xylene and the solution was brought to 130° C under magnetic stirring and a slight nitrogen flow. After about 30 minutes

one formed a compact solid, which was recovered by evaporation of the solvent.

The thus obtained polymer was not dissolved in 300 ml of formic acid, afterwards it was precipitated in 3 l of distilled water.

After filtration the polymer was washed three times with a liter of distilled water and finally it was dried under vacuum at 130° C for 16 hours.

The final product had an inherent viscosity of 2.1 dl/g, a temperature of glass transition (Tg) of 55° C and X-ray diffraction spectrum showing an amorphous structure.

## Claims

1. A process for the preparation of triazinic polymers comprising reacting a bifunctional triazinic derivative with two equivalents of at least one diamine.

2. A process according to claim 1, wherein the triazinic derivative is selected from triazines having general formula:

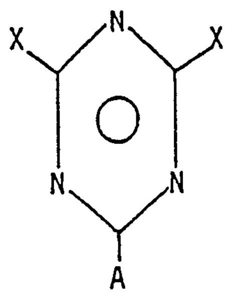

(I)

or from di-s-triazines having general formula:

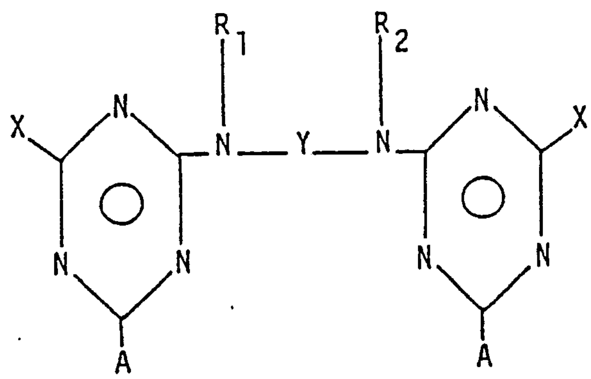

(II)

wherein X represents a halogen such as chlorine or bromine, A is selected from a linear or branched alkyl, cycloalkyl, aryl, alkylaryl or arylalkyl radical, containing from 1 to 20 carbon atoms or from $-OR_3$, $-NR_4R_5$ groups and wherein $R_1$, $R_2$, $R_3$, $R_4$, $R_5$, which may be the same or different, mean a hydrogen atom or a linear or branched alkyl, cycloalkyl, aryl, alkylaryl or arylalkyl radical containing from 1 to 30 carbon atoms and Y represents an alkylene, cycloalkylene, arylene, alkylenearyl or arylenealkyl group containing from 1 to 30 carbon atoms.

3. A process according to claim 2, wherein the triazines having general formula (I) are selected from: 2,4-dichloro-6-methyl-1,3,5 triazine, 2,4-dichloro-6-ethyl-1,3,5 triazine, 2,4-dichloro-6-phenyl-1,3,5 triazine, 2,4-dichloro-6-phenylethyl-1,3,5 triazine, 2,4-dichloro-6-methoxy-1,3,5 triazine, 2,4-dichloro-6-ethoxy-1,3,5 triazine, 2,4-dichloro-6-phenoxy-1,3,5 triazine, 2,4-dichloro-6-dimethylamino-1,3,5 triazine, 2,4-dichloro-6-dimethylamino-1,3,5 triazine, 2,4-dichloro-6-methylethylamino-1,3,5 triazine, 2,4-dichloro-6-phenylamino-1,3,5 triazine, 2,4-dibromo-6-methyl-1,3,5 triazine, 2,4-dibromo-6-ethyl-1,3,5 triazine.

4. A process according to claim 2, wherein the di-s-triazines are selected from N,N′-bis(2-chloro-4-methoxy-1,3,5-triazinyl)hexamethylenediamine, N,N′-bis(2-chloro-4-methoxy-1,3,5-triazinyl)-1,12 diamino

dodecane, N,N′-bis(2-chloro-4-methoxy-1,3,5-triazinyl)-1,10 diamino dodecane, N,N′-bis(2-chloro-4-ethoxy-1,3,5-triazinyl)-1,12 diamino dodecane, N,N′-bis(2-chloro-4-ethoxy-1,3,5-triazinyl)hexamethylenediamine, N,N′-bis(2-chloro-4-methyl-1,3,5 triazinyl)hexamethylenediamine, N,N′-bis(2-chloro-4-ethyl-1,3,5-triazinyl)-1,12 diamino dodecane, N,N′-bis(2-bromo-4-methoxy-1,3,5-triazinyl)hexamethylenediamine, and N,N′-bis(2-bromo-4-methoxy-1,3,5-triazinyl)-1,12 diamino dodecane.

5. A process according to any one of the preceding claims, wherein the diamine is selected from the ones having general formula:

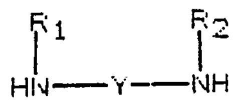

wherein Y, $R_1$ and $R_2$ have the aforesaid meaning.

6. A process according to claim 5, wherein the diamines are selected from 1,6-diamino hexane, 1,8-diamino octane, 1,10-diamino decane, 1,12-diamino dodecane, N,N′-dimethyl-1,12-diamino dodecane, cyclohexy lenediamine, phenylenediamine and N,N′-dimethylphenylenediamine.

7. A process according to any one of the preceding claims, wherein the polycondensation is carried out at a temperature ranging from 40 to 200° C with reaction times below 60 minutes.